# EUROPÄISCHE PATENTANMELDUNG

(11) **EP 4 645 019 A2**
(43) Veröffentlichungstag der Anmeldung: **05.11.2025**
(21) Anmeldenummer: 25166613.7
(22) Anmeldetag: 27.03.2025
(51) Int. Cl.: G05D 1/244, G05D 1/247, G05D 1/693, G05D 1/698

(54) **FAHRERLOSES TRANSPORTSYSTEM**

(30) Priorität: 30.04.2024 DE 102024112099
(71) Anmelder: SICK AG, 79183 Waldkirch (DE)
(72) Erfinder: Baldischweiler, Boris, 79194 Gundelfingen (DE)
(74) Vertreter: Manitz Finsterwald Patent- und Rechtsanwaltspartnerschaft mbB

(57) **Zusammenfassung**

Ein fahrerloses Transportsystem mit mehreren Fahrzeugen, die zum automatisch gesteuerten Fahren auf dem Boden eines Betriebsbereichs ausgebildet sind, weist ein Kollisionsvermeidungssystem auf. Das Kollisionsvermeidungssystem umfasst einen Bodenschallerzeuger, der an einem ersten Fahrzeug angeordnet und dazu ausgebildet ist, ein Körperschallsignal am Boden zu erzeugen oder dazu ausgebildet ist, ein Körperschallsignal im Boden zu erzeugen. Weiterhin umfasst das Kollisionsvermeidungssystem einen Bodenschallempfänger, der an einem zweiten Fahrzeug angeordnet und dazu ausgebildet ist, das Körperschallsignal vom Boden zu empfangen. Eine elektronische Steuereinheit steht mit dem Bodenschallempfänger in Signalverbindung und ist dazu ausgebildet, anhand einer Auswertung des von dem Bodenschallempfänger empfangenen Körperschallsignals eine drohende Kollision des ersten Fahrzeugs und des zweiten Fahrzeugs zu erkennen.

## Beschreibung

Die vorliegende Erfindung betrifft ein fahrerloses Transportsystem mit mehreren Fahrzeugen, die zum automatisch gesteuerten Fahren auf dem Boden eines Betriebsbereichs ausgebildet sind.

Solche Transportsysteme werden in vielfältiger Weise zum Fördern von Waren, Bauteilen, Zwischenprodukten und dergleichen verwendet. Als Fahrzeuge kommen hierbei alle Arten von automatisch fahrenden Fahrzeugen in Betracht, wie zum Beispiel AGVs (automated guided vehicles, fahrerlose Transportfahrzeuge), Flurförderfahrzeuge, Hubgeräte und dergleichen. Die Steuerung der Fahrzeuge kann mittels einer zentralen Steuereinheit des Transportsystems durchgeführt werden, beispielsweise über Funk. Es gibt jedoch auch fahrerlose Transportsysteme, bei denen sich die Fahrzeuge autonom innerhalb des Betriebsbereichs bewegen, beispielsweise unter Verwendung eines Rasternavigationssystems.

Es sind verschiedene Vorkehrungen bekannt, um bei fahrerlosen Transportsystemen unerwünschte Zusammenstöße von Fahrzeugen zu vermeiden. Beispielsweise können an jedem Fahrzeug Sensoren zum Überwachen der Umgebung vorgesehen sein. Häufig sind aber bestimmte Abschnitte des Betriebsbereichs für Überwachungssensoren schlecht oder überhaupt nicht einsehbar. Dies kann insbesondere an Kreuzungen und Einmündungen der Fall sein. Deshalb müssen die Fahrzeuge in solchen Bereichen häufig ihre Geschwindigkeit verringern. Dies geht jedoch mit einer verringerten Effizienz des Transportsystems einher.

Es besteht auch die Möglichkeit, mittels Funkübertragung eine Kommunikation der Fahrzeuge mit einer zentralen Steuereinheit zu ermöglichen und eine exakte Routenplanung für jedes einzelne Fahrzeug vorzusehen. Dies ist jedoch mit einem beträchtlichen Aufwand verbunden.

Es ist eine Aufgabe der Erfindung, mit einfachen Mitteln einen sicheren und effizienten Betrieb von fahrerlosen Transportsystemen zu ermöglichen.

Die Lösung der Aufgabe erfolgt durch ein fahrerloses Transportsystem mit den Merkmalen des Anspruchs 1.

Ein erstes erfindungsgemäßes fahrerloses Transportsystem weist ein Kollisionsvermeidungssystem auf, das umfasst:
wenigstens einen Bodenschallerzeuger, der an einem ersten Fahrzeug angeordnet und dazu ausgebildet ist, ein Körperschallsignal am Boden zu erzeugen oder dazu ausgebildet ist, ein Körperschallsignal im Boden zu erzeugen,
wenigstens einen Bodenschallempfänger, der an einem zweiten Fahrzeug angeordnet und dazu ausgebildet ist, das Körperschallsignal vom Boden zu empfangen, und
eine elektronische Steuereinheit, die mit dem Bodenschallempfänger in Signalverbindung steht und dazu ausgebildet ist, anhand einer Auswertung des von dem Bodenschallempfänger empfangenen Schallsignals eine drohende Kollision des ersten Fahrzeugs und des zweiten Fahrzeugs zu erkennen.

Das erste Fahrzeug ist also in der Lage, über im Boden geleitete Schallwellen eine das Fahrzeug betreffende Information an die elektronische Steuereinheit zu übermitteln. Die elektronische Steuereinheit kann zum Beispiel an einem anderen Fahrzeug angeordnet sein, das beispielsweise über den Bodenschall vor einem Herannahen des ersten Fahrzeugs gewarnt wird. Grundsätzlich kann es sich bei der elektronischen Steuereinheit auch um eine zentrale Steuereinheit des Transportsystems handeln, die über den Zustand des ersten Fahrzeugs mittels Bodenschall in Kenntnis gesetzt wird und ihrerseits zur Kollisionsvermeidung Steuerbefehle an wenigstens ein anderes Fahrzeug, insbesondere mittels Bodenschall, übermittelt. Ein Vorteil der Signalübertragung mittels Körperschall besteht darin, dass sie von Wänden und anderen Objekten nicht nennenswert behindert wird. Es tritt auch keine Lärmbelästigung im Betriebsbereich auf, wie das bei einer Signalübertragung mittels Luftschall der Fall wäre. Die Ausbreitung der Körperschallwellen an der Oberfläche des Bodens nimmt mit der Entfernung von der Schallquelle quadratisch ab, sodass das Körperschallsignal also nur in einem relativ kleinen Bereich um den Bodenschallerzeuger vom Bodenschallempfänger zu erfassen ist. Dies ist insofern vorteilhaft, als überflüssige Signalübertragungen vermieden werden. Beispielsweise wird es dadurch möglich, dass der Bodenschallempfänger ausschließlich das Körperschallsignal eines in unmittelbarer Nähe befindlichen Fahrzeugs erfasst, sodass dementsprechend nur bei Bedarf geprüft wird, ob eine Kollision droht.

Gemäß einer Ausführungsform der Erfindung weist das Kollisionsvermeidungssystem einen Satz von mehreren Bodenschallerzeugern und mehreren Bodenschallempfängern auf, wobei an jedem der Fahrzeuge wenigstens ein Bodenschallerzeuger und wenigstens ein Bodenschallempfänger angeordnet ist. Es kann auch an jedem der Fahrzeuge eine elektronische Steuereinheit angeordnet sein, die mit dem Bodenschallerzeuger und/oder mit dem Bodenschallempfänger des betreffenden Fahrzeugs in Signalverbindung steht. Bei dieser Ausführungsform können die Fahrzeuge des Transportsystems in beliebiger Weise je nach Bedarf miteinander kommunizieren. Eine zentrale Steuereinheit ist dann nicht zwingend erforderlich.

Die elektronische Steuereinheit kann dazu ausgebildet sein, bei oder nach dem Erkennen einer drohenden Kollision die Geschwindigkeit wenigstens eines der Fahrzeuge zu verändern und/oder bei oder nach dem Erkennen einer drohenden Kollision wenigstens ein Fahrzeug zu stoppen. Auf diese Weise können Kollisionen ausgeschlossen werden, ohne dass die Ausgabe eines Warnsignals erforderlich ist.

Eine weitere Ausführungsform der Erfindung sieht vor, dass an wenigstens einem der Fahrzeuge wenigstens zwei Bodenschallerzeuger oder Bodenschallempfänger in einem Abstand voneinander angeordnet sind, wobei die elektronische Steuereinheit eines Fahrzeugs dazu ausgebildet ist, anhand eines Vergleichs der von den wenigstens zwei Bodenschallerzeugern erzeugten Körperschallsignale und/oder anhand eines Vergleichs der von den wenigstens zwei Bodenschallempfängern empfangenen Körperschallsignale die Position des Fahrzeugs oder eines anderen Fahrzeugs zu bestimmen. Somit kann eine Ortung eines Fahrzeugs über Bodenschall vorgenommen werden.

Das Körperschallsignal kann von dem ersten Fahrzeug an das zweite Fahrzeug zu übermittelnde Daten umfassen. Dann können Daten über Bodenschallwellen zwischen zwei Fahrzeugen übertragen werden.

Das Körperschallsignal kann eine Kennung eines ersten Fahrzeugs und/oder eine aktuelle Position des ersten Fahrzeugs und/oder eine aktuelle Geschwindigkeit des ersten Fahrzeugs und/oder eine aktuelle Richtung des ersten Fahrzeugs angeben. Somit kann beispielsweise die Steuereinheit eines zweiten Fahrzeugs auf einfache und schnelle Weise feststellen, ob das erste Fahrzeug eine Kollisionsgefahr darstellt oder nicht.

Es kann vorgesehen sein, dass der Bodenschallerzeuger an einem Rad des ersten Fahrzeugs angeordnet ist und/oder dass der Bodenschallempfänger an einem Rad des zweiten Fahrzeugs angeordnet ist. Somit kann auf ein separates Kontaktelement zur Übertragung der Bodenschallsignale vom Fahrzeug oder zum Fahrzeug verzichtet werden. Der Bodenschallerzeuger und/oder der Bodenschallempfänger kann auch ein Bestandteil des Rads selbst sein. Grundsätzlich kann auch ein Schallabnehmer in Form eines Schleppdrahts über den Boden geführt werden. Der Bodenschallempfänger kann ferner einen optischen Sensor wie zum Beispiel einen Lasersensor umfassen, der den Boden abtastet und so die Bodenschallwellen erkennt.

Eine spezielle Ausgestaltung der Erfindung sieht vor, dass der Bodenschallerzeuger ein Schwingungsmodul mit einer Kontaktfläche für einen Kontakt mit dem Boden ist. Das Schwingungsmodul kann einen Motor umfassen, der eine Scheibe mit einer Unwucht antreibt. Solche Schwingungsmodule können relativ kostengünstig bereitgestellt werden.

Der Bodenschallempfänger kann ein Beschleunigungssensor oder ein Vibrationssensor sein. Derartige Sensoren können auch geringfügige Schwingungen des Bodens erkennen.

Die elektronische Steuereinheit kann dazu ausgebildet sein, zwischen beispielsweise longitudinalen Bodenschallwellen, transversalen Bodenschallwellen, Rayleigh-Wellen, Love-Wellen und Biegewellen zu unterscheiden. Dies erleichtert das Ermitteln der Sendeposition sowie das Unterdrücken von Störungen. Vorzugsweise ist der Körperschallerzeuger dafür ausgelegt, Oberflächenwellen wie zum Beispiel Rayleigh-Wellen, Love-Wellen und Biegewellen zu erzeugen, da diese eine besonders hohe Reichweite aufweisen. Dementsprechend ist es auch bevorzugt, dass der Bodenschallempfänger speziell für den Empfang von Oberflächenwellen wie zum Beispiel Rayleigh-Wellen, Love-Wellen und Biegewellen ausgelegt ist.

Die Erfindung betrifft auch ein fahrerloses Transportsystem mit wenigstens einem Fahrzeug, das zum automatisch gesteuerten Fahren auf dem Boden eines Betriebsbereichs ausgebildet ist, und mit einem Satz von am Boden anzuordnenden Markierungselementen, denen Navigationsinformationen zu entnehmen sind.

Die Markierungselemente am Boden dienen zur Orientierung des automatisch fahrenden Fahrzeugs innerhalb eines durch das Raster definierten Aktionsbereichs. Die Navigationsinformationen ermöglichen es dem Fahrzeug, eine zielgerichtete Fahrt von einem Ausgangspunkt zu einem Endpunkt auszuführen.

Solche Rasternavigationssysteme sind insbesondere bei großen Aktionsbereichen jedoch relativ aufwändig.

Erfindungsgemäß umfasst wenigstens eines und vorzugsweise jedes der Markierungselemente einen Bodenschallerzeuger, der dazu ausgebildet ist, ein Körperschallsignal, das eine Navigationsinformation angibt, am oder im Boden zu erzeugen, und/oder einen Bodenschallempfänger, der dazu ausgebildet ist, ein Körperschallsignal, das eine Navigationsinformation angibt, vom Boden zu empfangen.

Die Markierungselemente können auf einfache Weise über Bodenschall ihre Position an vorbeikommende Fahrzeuge übermitteln. Das wenigstens eine Fahrzeug kann hierfür einen Bodenschallempfänger aufweisen, der dazu ausgebildet ist, das Körperschallsignal vom Boden zu empfangen. Die Fahrzeuge des fahrerlosen Transportsystems können die Positionen zur Navigation nutzen. Über einen Bodenschallempfänger kann ein Markierungselement andererseits gegebenenfalls ein Körperschallsignal von einem Fahrzeug empfangen und dieses beispielsweise zur Positionskontrolle an einen Leitstand weitergeben. Das wenigstens eine Fahrzeug kann hierfür einen Bodenschallerzeuger aufweisen, der dazu ausgebildet ist, ein Körperschallsignal am Boden zu erzeugen oder dazu ausgebildet ist, ein Körperschallsignal im Boden zu erzeugen. Es ist auch möglich, dass die Markierungselemente Steuerbefehle an die Fahrzeuge übermitteln. Beispielsweise kann ein Markierungselement mit einer Beladestation verknüpft sein und dazu ausgebildet sein, umliegenden Fahrzeugen zu signalisieren, dass mehr Fahrzeuge oder weniger Fahrzeuge zum Beladen benötigt werden. Die Markierungselemente sind vorzugsweise fest am Boden angebracht, also zum Beispiel am Boden angeschraubt oder in den Boden eingelassen.

Das hier beschriebene, den Satz von am Boden anzuordnenden Markierungselementen umfassende, fahrerlose Transportsystem kann im Übrigen vorzugsweise so gestaltet sein wie oben zur ersten Erfindung und deren Ausführungsformen beschrieben und hierfür insbesondere auch mehrere Fahrzeuge aufweisen.

Weiterhin betrifft die Erfindung ein fahrerloses Transportsystem mit wenigstens einem Fahrzeug, das zum automatisch gesteuerten Fahren auf dem Boden eines Betriebsbereichs ausgebildet ist, mit einem beweglichen Roboterarm zum Beladen und/oder Entladen des Fahrzeugs, wobei an dem beweglichen Roboterarm wenigstens ein Körperschallerzeuger angeordnet ist, der dazu ausgebildet ist, ein Körperschallsignal an das Fahrzeug zu übertragen, wenn der Roboterarm das Fahrzeug berührt, und/oder wobei an dem beweglichen Roboterarm wenigstens ein Körperschallempfänger angeordnet ist, der dazu ausgebildet ist, ein Körperschallsignal von dem Fahrzeug zu empfangen, wenn der Roboterarm das Fahrzeug berührt.

Der den Roboterarm aufweisende Roboter kann auf diese Weise einfach und schnell mit dem Fahrzeug kommunizieren. Das wenigstens eine Fahrzeug kann hierfür einen Körperschallempfänger aufweisen, der zum Empfangen von Körperschallsignalen ausgebildet ist. Beispielsweise kann der Roboterarm dem Fahrzeug signalisieren, dass der Ladevorgang abgeschlossen ist. Alternativ oder zusätzlich könnte das betreffende Fahrzeug dem Roboter signalisieren, dass das zulässige Gesamtgewicht des Fahrzeugs erreicht ist. Das wenigstens eine Fahrzeug kann hierfür einen Körperschallerzeuger aufweisen, der zum Erzeugen von Körperschallsignalen ausgebildet ist.

Das einen Roboter beziehungsweise Roboterarm umfassende fahrerlose Transportsystem kann im Übrigen vorzugsweise so gestaltet sein wie oben zur ersten Erfindung und deren Ausführungsformen beschrieben und hierfür insbesondere auch mehrere Fahrzeuge aufweisen.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine vereinfachte Draufsicht auf ein fahrerloses Transportsystem gemäß einer ersten Ausführungsform der Erfindung.
- Fig. 2: ist eine vereinfachte Draufsicht auf ein fahrerloses Transportsystem gemäß einer zweiten Ausführungsform der Erfindung.
- Fig. 3: zeigt ein Transportsystem gemäß einer dritten Ausführungsform der Erfindung von der Seite.
- Fig. 4: zeigt einen Bodenschallerzeuger an einem Rad eines Fahrzeugs eines erfindungsgemäßen Transportsystems.

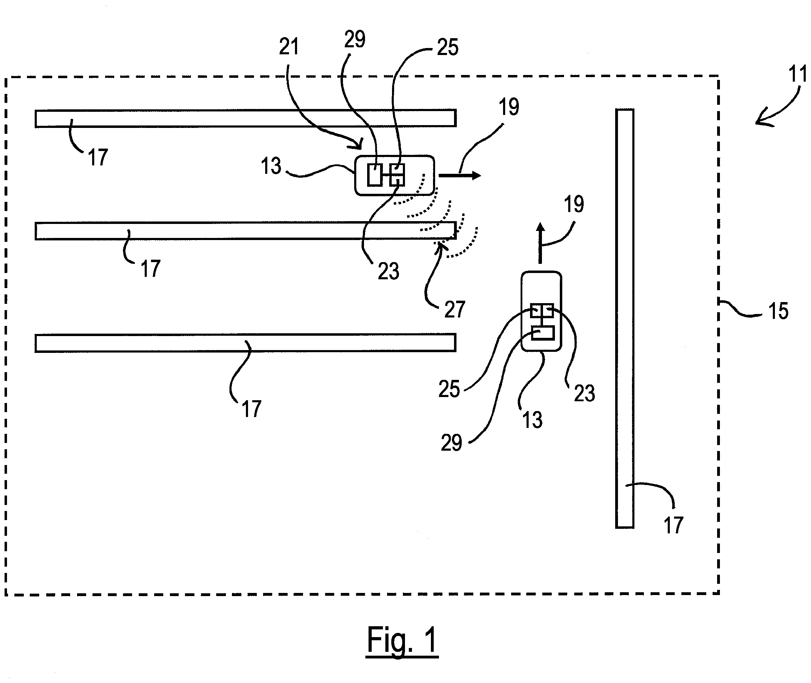

Das in Fig. 1 gezeigte, gemäß einer Ausführungsform der Erfindung gestaltete fahrerlose Transportsystem 11 dient dazu, mittels mehrerer Fahrzeuge 13 nicht dargestellte Objekte wie Waren oder Bauteile in einem begrenzten Betriebsbereich 15 wie zum Beispiel einer Produktions- oder Lagerhalle zu vorgegebenen Zielorten zu leiten. Die Fahrzeuge 13 sind hierfür zum automatisch gesteuerten Fahren auf dem Boden des Betriebsbereichs 15 ausgebildet. In dem Betriebsbereich 15 können sich zum Beispiel Hochregale 17 oder andere Hindernisse befinden. In Fig. 1 sind beispielhaft zwei Fahrzeuge 13 gezeigt, wobei das fahrerlose Transportsystem 11 auch mehr als zwei Fahrzeuge 13 aufweisen kann. Die momentanen Fahrtrichtungen 19 der Fahrzeuge 13 sind in Fig. 1 durch Pfeile angegeben.

Bei der in Fig. 1 dargestellten Situation droht eine Kollision der Fahrzeuge 13, wenn diese ihre Fahrt unverändert fortsetzen. Eventuell an den Fahrzeugen 13 angeordnete Überwachungssensoren wie zum Beispiel Kameras sind wegen der durch die Hochregale 17 eingeschränkten Sicht nur begrenzt einsatzfähig.

Das fahrerlose Transportsystem 11 ist daher mit einem Kollisionsvermeidungssystem 21 ausgestattet, das auf der Übertragung von Bodenschallwellen beruht. Insbesondere ist an jedem der Fahrzeuge 13 ein Bodenschallerzeuger 23 und ein Bodenschallempfänger 25 angeordnet. Die Bodenschallerzeuger 23 sind dazu ausgebildet, ein Körperschallsignal am oder im Boden zu erzeugen. Beispielsweise kann jeder der Bodenschallerzeuger 23 ein Schwingungsmodul umfassen, das im Bereich eines nicht dargestellten Rades des Fahrzeugs 13 vorgesehen ist. Bei den Bodenschallempfängern 25 kann es sich um Beschleunigungssensoren oder um Schwingungssensoren handeln, die im Bereich der Räder der Fahrzeuge 13 vorgesehen sind.

Jeder der Bodenschallerzeuger 23 erzeugt am oder im Boden ein spezifisch kodiertes Körperschallsignal 27, das eine Kennung des betreffenden Fahrzeugs 13, eine aktuelle Position dieses Fahrzeugs 13 und gegebenenfalls dessen aktuelle Geschwindigkeit angibt. Vorzugsweise sind die Bodenschallerzeuger 23 für eine Erzeugung von Körperschallsignalen 27 in Form von Oberflächenwellen ausgelegt. Wie in Fig. 1 erkennbar wird die Übertragung des Bodenschalls durch die Hochregale 17 nicht behindert.

Jedes der Fahrzeuge 13 umfasst eine elektronische Steuereinheit 29, die mit dem Bodenschallerzeuger 23 und mit dem Bodenschallempfänger 25 des betreffenden Fahrzeugs 13 in Signalverbindung steht. Gemäß dem Beispiel von Fig. 1 sendet der Bodenschallerzeuger 23 des im Bild linken oberen Fahrzeugs 13 ein Köperschallsignal 27 aus, das von dem Bodenschallempfänger 25 des im Bild rechten unteren Fahrzeugs 13 empfangen werden kann. Die elektronische Steuereinheit 29 des rechten unteren Fahrzeugs 13 ist in der Lage, anhand einer Auswertung des von dem Bodenschallempfänger 25 empfangenen Körperschallsignals 27 die drohende Kollision der Fahrzeuge 13 zu erkennen. Die elektronische Steuereinheit 29 kann dann einen Steuerbefehl ausgeben, der für eine Verlangsamung der Fahrt des rechten unteren Fahrzeugs 13 sorgt. Alternativ kann zur Kollisionsvermeidung auch der Bodenschallerzeuger 23 des rechten unteren Fahrzeugs 13 ein nicht dargestelltes Körperschallsignal 27 aussenden, welches das linke obere Fahrzeug 13 zu einer Verlangsamung der Fahrt anweist. Die Entscheidung darüber, welches der Fahrzeuge 13 verlangsamt oder angehalten wird, kann auf Prioritätsregeln beruhen, die in Speichereinrichtungen der elektronischen Steuereinheiten 29 abgelegt sind. Es kann auch eine Beschleunigung eines der Fahrzeuge 13 in Betracht kommen, um eine Kollision zu vermeiden.

Die Fahrzeuge 13 können über Bodenschall autonom untereinander kommunizieren, sodass eine zentrale Steuereinheit nicht zwingend erforderlich ist. Eine solche kann bei Bedarf aber zusätzlich vorgesehen sein.

Gemäß einer nicht dargestellten Ausführungsform sind an den Fahrzeugen 13 jeweils mehrere Bodenschallerzeuger 23 und/oder Bodenschallempfänger 25 in einem Abstand voneinander angeordnet. Bei dieser Ausgestaltung ist eine Ortung eines Fahrzeugs 13 durch ein anderes Fahrzeug 13 möglich.

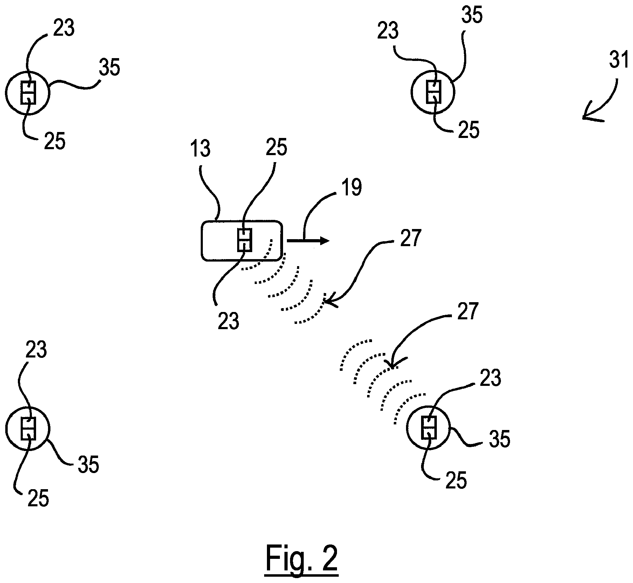

Das in Fig. 2 gezeigte, gemäß einer alternativen Ausführungsform der Erfindung gestaltete fahrerlose Transportsystem 31 weist einen Satz von Markierungselementen 35 auf, die am Boden befestigt sind. Jedes der Markierungselemente 35 weist sowohl einen Bodenschallerzeuger 23 als auch einen Bodenschallempfänger 25 auf. Somit ist es möglich, dass über Bodenschall Signale zwischen dem Fahrzeug 13 und den Markierungselementen 35 ausgetauscht werden. Beispielsweise können die Markierungselemente 35 ihre Positionen an das Fahrzeug 13 melden und das Fahrzeug 13 kann einem Markierungselement 35 eine Annäherung mitteilen.

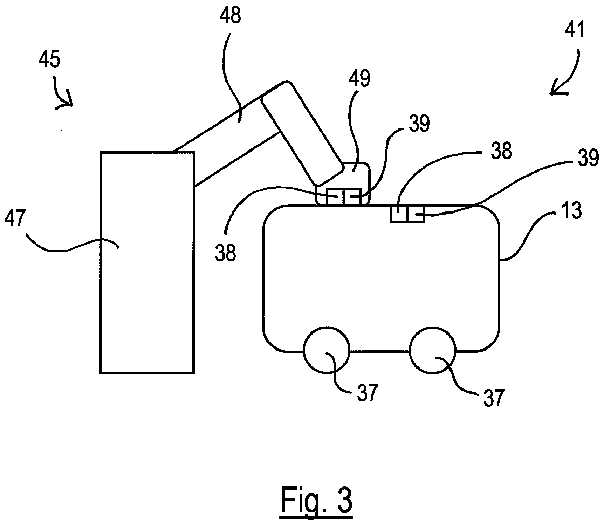

Das in Fig. 3 gezeigte, gemäß einer weiteren alternativen Ausführungsform der Erfindung gestaltete fahrerlose Transportsystem 41 weist ein Fahrzeug 13 mit Rädern 37 sowie einem Körperschallerzeuger 38 und einem Körperschallempfänger 39 auf. Ferner ist das in Fig. 3 dargestellte fahrerlose Transportsystem 41 mit einem Roboter 45 zum Beladen und Entladen des Fahrzeugs 13 versehen. Der Roboter 45 weist eine Basis 47 sowie einen beweglichen Roboterarm 48 mit einem Endeffektor 49 auf. Der Endeffektor 49 des Roboterarms 48 ist für einen Kontakt mit dem Fahrzeug 13 ausgebildet und weist hier den Körperschallerzeuger 38 sowie den Körperschallempfänger 39 auf. Aufgrund der Körperschallerzeuger 38 und der Körperschallempfänger 39 können zwischen dem Fahrzeug 13 und dem Roboter 45 Informationen ausgetauscht werden. Beispielsweise kann der Roboter 45 signalisieren, wenn der Belade- oder Entladeprozess abgeschlossen ist. Ebenso kann das Fahrzeug 13 ein Signal an den Roboter 45 ausgeben, wenn während des Beladens das zulässige Gesamtgewicht des Fahrzeugs 13 erreicht ist.

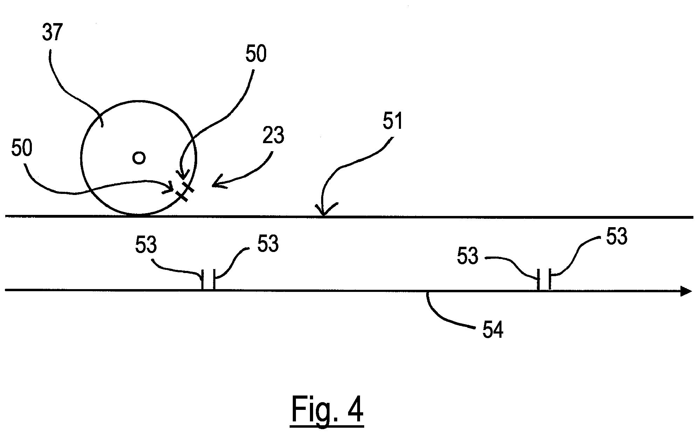

Ein besonders einfaches Ausführungsbeispiel für einen Bodenschallerzeuger 23 ist in Fig. 4 gezeigt. An einem Rad 37 eines nicht näher dargestellten Fahrzeugs eines fahrerlosen Transportsystems sind zwei Schlagbolzen 50 aus Metall in einem definierten Abstand voneinander angebracht. Beim Abrollen des Rades 37 am Boden 51 ergeben sich Schallimpulse 53, wie auf der Zeitachse 54 dargestellt ist. Die Anzahl und der Abstand der Schlagbolzen 50 geben die Kennung des betreffenden Fahrzeugs an. Aus der Wiederholrate der Schallimpulse 53 kann die Geschwindigkeit des Fahrzeugs ermittelt werden. In diesem Fall ist nicht zwingend eine bidirektionale Kommunikation notwendig. Die Vorfahrt kann gegebenenfalls auch über festgelegte Regeln geklärt werden. Beispielsweise kann eine Reihenfolge der Kennungen aller vorhandenen Fahrzeuge in einem Speicher hinterlegt sein.

Eine Signalübertragung mittels Bodenschall ist im Kontext von fahrerlosen Transportsystemen 11, 31, 41 besonders vorteilhaft, weil die Signale für anwesende Personen nicht wahrnehmbar sind und zudem von Hindernissen wie Hochregalen 17 nicht beeinträchtigt werden. Zudem kann die Komplexität im Vergleich zu genehmigungspflichtigen Funksystemen beträchtlich reduziert werden.

### Bezugszeichenliste

- 11: fahrerloses Transportsystem
- 13: Fahrzeug
- 15: Betriebsbereich
- 17: Hochregal
- 19: momentane Fahrtrichtung
- 21: Kollisionsvermeidungssystem
- 23: Bodenschallerzeuger
- 25: Bodenschallempfänger
- 27: Körperschallsignal
- 29: elektrische Steuereinheit
- 31: fahrerloses Transportsystem
- 35: Markierungselement
- 37: Rad
- 38: Körperschallerzeuger
- 39: Körperschallempfänger
- 41: fahrerloses Transportsystem
- 45: Roboter
- 47: Basis
- 48: Roboterarm
- 49: Endeffektor
- 50: Schlagbolzen
- 51: Boden
- 53: Schallimpuls
- 54: Zeitachse

## Patentansprüche

1. Fahrerloses Transportsystem (11, 31, 41) mit mehreren Fahrzeugen (13), die zum automatisch gesteuerten Fahren auf dem Boden (51) eines Betriebsbereichs (15) ausgebildet sind, wobei das fahrerlose Transportsystem (11, 31, 41) ein Kollisionsvermeidungssystem (21) aufweist, das umfasst:
wenigstens einen Bodenschallerzeuger (23), der an einem ersten Fahrzeug (13) angeordnet und dazu ausgebildet ist, ein Körperschallsignal (27) am Boden zu erzeugen oder dazu ausgebildet ist, ein Körperschallsignal (27) im Boden (51) zu erzeugen,
wenigstens einen Bodenschallempfänger (25), der an einem zweiten Fahrzeug (13) angeordnet und dazu ausgebildet ist, das Körperschallsignal (27) vom Boden (51) zu empfangen, und
eine elektronische Steuereinheit (29), die mit dem Bodenschallempfänger (25) in Signalverbindung steht und dazu ausgebildet ist, anhand einer Auswertung des von dem Bodenschallempfänger (25) empfangenen Körperschallsignals (27) eine drohende Kollision des ersten Fahrzeugs (13) und des zweiten Fahrzeugs (13) zu erkennen.

2. Fahrerloses Transportsystem nach Anspruch 1,
wobei das Kollisionsvermeidungssystem (21) einen Satz von mehreren Bodenschallerzeugern (23) und mehreren Bodenschallempfängern (25) aufweist, wobei an jedem der Fahrzeuge (13) wenigstens ein Bodenschallerzeuger (23) und wenigstens ein Bodenschallempfänger (25) angeordnet ist.

3. Fahrerloses Transportsystem nach Anspruch 1 oder 2,
wobei die elektronische Steuereinheit (29) dazu ausgebildet ist, bei oder nach dem Erkennen einer drohenden Kollision die Geschwindigkeit wenigstens eines der Fahrzeuge (13) zu verändern und/oder bei oder nach dem Erkennen einer drohenden Kollision wenigstens ein Fahrzeug (13) zu stoppen.

4. Fahrerloses Transportsystem nach einem der vorstehenden Ansprüche, wobei an wenigstens einem der Fahrzeuge (13) wenigstens zwei Bodenschallerzeuger (23) oder Bodenschallempfänger (25) in einem Abstand voneinander angeordnet sind und wobei die elektronische Steuereinheit (29) eines Fahrzeugs (13) dazu ausgebildet ist, anhand eines Vergleichs der von den wenigstens zwei Bodenschallerzeugern (23) erzeugten Körperschallsignale (27) und/oder anhand eines Vergleichs der von den wenigstens zwei Bodenschallempfängern (25) empfangenen Körperschallsignale (27) die Position des Fahrzeugs (13) oder eines anderen Fahrzeugs (13) zu bestimmen.

5. Fahrerloses Transportsystem nach einem der vorstehenden Ansprüche, wobei das Körperschallsignal (27) von dem ersten Fahrzeug (13) an das zweite Fahrzeug (13) zu übermittelnde Daten umfasst.

6. Fahrerloses Transportsystem nach einem der vorstehenden Ansprüche, wobei das Körperschallsignal (27) eine Kennung des ersten Fahrzeugs (13) und/oder eine aktuelle Position des ersten Fahrzeugs (13) und/oder eine aktuelle Geschwindigkeit des ersten Fahrzeugs (13) und/oder eine aktuelle Richtung des ersten Fahrzeugs (13) angibt.

7. Fahrerloses Transportsystem nach einem der vorstehenden Ansprüche, wobei der Bodenschallerzeuger (23) an einem Rad (37) des ersten Fahrzeugs (13) angeordnet ist und/oder wobei der Bodenschallempfänger (25) an einem Rad (37) des zweiten Fahrzeugs (13) angeordnet ist.

8. Fahrerloses Transportsystem nach einem der vorstehenden Ansprüche, wobei der Bodenschallerzeuger (23) ein Schwingungsmodul mit einer Kontaktfläche für einen Kontakt mit dem Boden (51) ist.

9. Fahrerloses Transportsystem nach einem der vorstehenden Ansprüche, wobei der Bodenschallempfänger (25) ein Beschleunigungssensor oder ein Vibrationssensor ist.

10. Fahrerloses Transportsystem (31) mit wenigstens einem Fahrzeug (13), das zum automatisch gesteuerten Fahren auf dem Boden (51) eines Betriebsbereichs (15) ausgebildet ist, mit einem Satz von am Boden (51) anzuordnenden Markierungselementen (35), denen Navigationsinformationen zu entnehmen sind, wobei wenigstens eines und vorzugsweise jedes der Markierungselemente (35) einen Bodenschallerzeuger (23) umfasst, der dazu ausgebildet ist, ein Körperschallsignal (27), das eine Navigationsinformation angibt, am oder im Boden (51) zu erzeugen, und/oder wobei wenigstens eines und vorzugsweise jedes der Markierungselemente (35) einen Bodenschallempfänger (25) umfasst, der dazu ausgebildet ist, ein Körperschallsignal (27), das eine Navigationsinformation angibt, vom Boden (51) zu empfangen.

11. Fahrerloses Transportsystem (41) mit wenigstens einem Fahrzeug (13), das zum automatisch gesteuerten Fahren auf dem Boden (51) eines Betriebsbereichs (15) ausgebildet ist,
mit einem beweglichen Roboterarm (48) zum Beladen und/oder Entladen des Fahrzeugs (13), wobei an dem beweglichen Roboterarm (48) wenigstens ein Körperschallerzeuger (38) angeordnet ist, der dazu ausgebildet ist, ein Körperschallsignal (27) an das Fahrzeug (13) zu übertragen, wenn der Roboterarm (48) das Fahrzeug (13) berührt, und/oder wobei an dem beweglichen Roboterarm (48) wenigstens ein Körperschallempfänger (39) angeordnet ist, der dazu ausgebildet ist, ein Körperschallsignal (27) von dem Fahrzeug (13) zu empfangen, wenn der Roboterarm (48) das Fahrzeug (13) berührt.
